# EUROPÄISCHE PATENTSCHRIFT

(11) **EP 0 875 749 B1**
(45) Veröffentlichungstag und Bekanntmachung des Hinweises auf die Patenterteilung: **01.09.2004**
(21) Anmeldenummer: 98107232.5
(22) Anmeldetag: 21.04.1998
(51) Int. Cl.: G01N 22/00, G01N 22/04

(54) **Verfahren zur polarimetrischen Fahrbahnerkennung**
Method for polarimetric road recognition
Procédé polarimétrique pour la reconnaissance de la route

(30) Priorität: 02.05.1997 DE 19718623
(43) Veröffentlichungstag der Anmeldung: 04.11.1998
(73) Patentinhaber: DaimlerChrysler AG, 70567 Stuttgart (DE)
(72) Erfinder: Finkele, Rolf, 89601 Schelklingen (DE)

(56) Entgegenhaltungen:
- EP-A- 0 875 750
- WO-A-85/02266
- DE-A- 3 829 008
- US-A- 3 836 973

## Beschreibung

Die Erfindung betrifft ein Verfahren zur Erkennung des Zustandes einer Fahrbahnoberfläche nach dem Oberbegriff des Patentanspruch 1.

Aus der DE 40 40 842 A 1 ist eine Anordnung zur Erkennung von insbesondere vereisten Fahrbahnoberflächen bekannt. Dabei werden die unterschiedlichen Infrarotabsorptionseigenschaften verschiedener Fahrbahnzustände sowie deren Mikrowellen-Streueigenschaften verknüpft, um eine Unterscheidung zwischen den Oberflächenzuständen trocken, nass und vereist zu gewinnen.

Die deutsche Offenlegungsschrift DE 38 29 008 A 1 zeigt ein Verfahren und eine Vorrichtung, mittels welchen der Tausalzgehalt von auf Verkehrsflächen befindlichen Wasserschichten gemessen werden kann. Hierbei wird eine hochfequente Strahlung, deren Frequenz zwischen 100 und 10000 MHz liegt, auf den zu untersuchenden mit einer Wasserschicht bedeckten Bereich der Verkehrsfläche gerichtet. Aus der Intensitätsänderung und/oder die Phasenverschiebung des von der zu untersuchenden Wasserschicht reflektierten Strahlungsanteils in bezug auf die auf die Wasserschicht gerichtete einfallende Strahlung wird ein Maß für den Salzgehalt der Wasserschicht hergeleitet. Um den unerwünschten Einfluss der Dicke der Wasserschicht klein zu halten, wird hierbei vorgeschlagen, die Frequenz der hochfrequenten Strahlung kleiner als 1000 MHz, vorzugsweise zu 500 MHz, zu wählen. Die beabsichtige Unterdrückung des Einflusses der Dicke der Wasserschicht führt dazu, dass das Verfahren keine Hinweise darauf gibt, wie mittels einer derartigen Vorrichtung Informationen über die Dicke von auf der Verkehrsfläche befindlichen Wasserschichten gewonnen werden könnten.

Druckschrift WO 85 022 66 A1 offenbart ein Verfahren zur Messung wetterbedingter Zustandsänderungen an der Oberfläche von Verkehrsflächen. Dabei wird die Bestimmung der Art des jeweils auf der Fläche vorliegenden Schichtes und die zugehörige Schichtdicke ermöglicht. Eine Erfassung der Rauhigkeit der Fahrbahnoberfläche ist nicht offenbart.

Aufgabe der Erfindung ist es deshalb, ein Verfahren zur Erkennung des Zustandes einer Fahrbahnoberfläche zu finden, welche es ermöglicht, sowie die Nässe-, Verschmutzungs-, und Vereisungsgrad der Fahrbahnoberfläche als auch ihre Rauhigkeit zu bestimmen.

Die Aufgabe wird durch eine Verfahren mit den Merkmalen des Patentanspruchs 1 gelöst. Vorteilhafte Ausgestaltungen und Weiterbildungen der Erfindung werden durch die Unteransprüche beschrieben.

Die Erfindung hat den Vorteil, daß sich die Depolarisationseigenschaften des ausgeleuchteten Fahrbahnbereichs anschaulich z.B. in einer Poincare-Kugel-Darstellung abbilden lassen und mittels eines Klassifikationsschema der Näße-, Vereisungs- und Verschmutzungsgrad sowie die Rauhigkeit der Fahrbahnoberfläche bestimmt wird. Aus theoretischen Arbeiten betreffend die Interferenzeigenschaften von Strahlen in Kristallen, ist es bekannt, daß durch Überlagerung von zwei polarisierten elektromagnetischen Wellen, die Polarisation einen Kreis auf der Poincare-Kugel bildet, wenn die relative Phasenbeziehung sich ändert (Pancharatnam S.: Proc.. of the Indian Accademy of Sciencies, Bangalore, Vol.44, 1956, S. 247). Die Erfindung korreliert diese Phasenbeziehung direkt mit der Schichtdicke der auf der Fahrbahn gegenbenenfalls befindlichen Wasser-, Eis- oder Schmutzschicht (z.B. Ölschicht). Außerdem kann in vorteilhafterweise aus den Depolarisationseigenschaften von zirkular polarisierten Wellen, die einem kleineren Einfallswinkel als den Brewster Winkel für trockenen Fahrbahn besitzen, aus der Änderung des Drehsinns der reflektierten Welle auf den Übergang von trockener zu vereisten Fahrbahn geschlossen werden.

Die Erfindung wird im folgenden anhand von Ausführungsbeispielen beschrieben unter Bezugnahme auf schematische Zeichnungen.

In Fig.1 ist die Poincare-Kugel Darstellung der Polarisationszustände der reflektierten Wellen mit zunehmender Eisschichtdicke angegeben, wobei die einfallenden Wellen (i) linkszirkular, (ii) -45° linear und (iii) rechtszirkular polarisiert sind.

In Fig. 2 sind die Meßergebnisse für rauhen, trockenen Fahrbahnbelag für die in Fig. 1 angegebenen einfallenden Wellen dargestellt.

Fig. 3 zeigt die Meßergebnisse für rauhen, mit einer dünnen Eisschicht bedeckten Fahrbahnbelag. für die in Fig.1 angegebenen einfallenden Wellen.

Um die Fahrbahnzustandserkennung gemäß der Erfindung durchführen zukönnen, werden Sender und Empfänger an zwei verschiedenen Orten, d.h. bistatisch aufgebaut. Die Sender werden für einen Einfallswinkels der gesendeten Wellen bzgl. der Fahrbahn leicht unterhalb des Brewster Winkels für trockenen Fahrbahn (etwa 64°) eingestellt. Der Einfallswinkel liegt für diesen Fall zwischen 59 und 60°. Die gesendeten Signale müssen vertikal und horizontal polarisierte Anteile besitzen. Vorteilhaft ist die Verwendung von zirkularpolarisierten Sendesignalen.

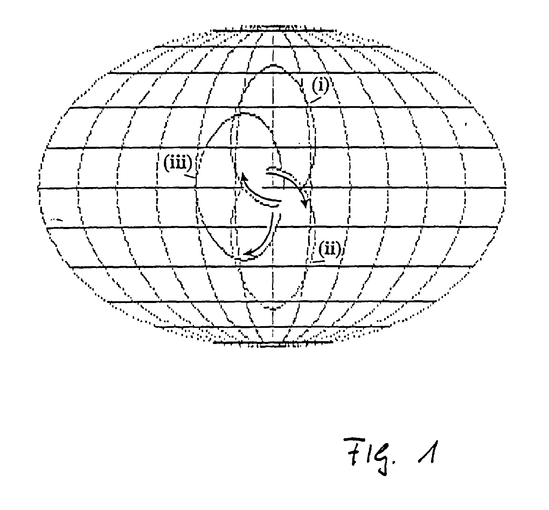

In folgenden Ausführungsbeispiel wird eine zirkular polarisierte Welle ausgesendetet. Gemäß Fig1. wird der Polarisationzustand nach der Reflektion bei trockener Fahrbahn in der Nähe des Äquators auf der Poincare-Kugel als Projektionspunkt abgebildet. Wird die Fahrbahn mit einer Eisschicht bedeckt, so wird die reflektierte Welle aus einer Überlagerungun einer an der Oberfläche der Eisschicht reflektierten Welle und einer an der darunterliegenden Fahrbahn reflektierten Welle gebildet. Mit zunehmender Eisschichtdicke ändert sich die Phasenbeziehung zwischen den überlagerten Wellen, während die Intensität der Wellen im wesentlichen gleich bleibt. Die Projektion der Polarisationszustände der reflektierten Wellen auf der Poincare-Kugel ergibt somit eine Kreisbahn. Ein Umlauf auf der Kreisbahn entspricht in etwa der Änderung der Eisschichtdicke um eine viertel Wellenlänge der einfallenden Welle. Für einen polarimetrisches Millmeterwellen-System, das z.B. bei 76 GHz arbeitet, hat die einfallende Welle eine Wellenlänge von 4mm. Bei einer Eisschichtdickenänderung von 1 mm legt der auf die Poincare-Kugel projezierte Polarisationszustand einem kompletten Kreisumlauf zurück. (siehe Fig.1 (i)). Für -45° linear oder rechtszirkular polarisierte Wellen sind die Kreisbewegungen auf der Poincare-Kugel entsprechend dargestellt (siehe Fig.1 (ii) und (iii)).

Bei Übergang von trockener nach vereister Fahrbahn findet ein Wechsel im Drehsinn der reflektierten Welle statt. Für den Fall einer linkszirkurlar polarisierten Welle werden die Projektionspunkte auf der Poincare-Kugel deshalb im Uhrzeigersinn die Kreisbahn durchlaufen. Beobachtet man ständig den Verlauf der Projektionspunkte, so kann bei mehrmaligem Durchlauf der Kreisbahn aufgrund Eisschichtdicken von mehr als 1mm aus dem Drehsinn unterschieden werden, ob es sich um eine trockene oder vereiste Fahrbahn handelt. Die Rauhigkeit der Fahrbahnoberfläche spiegelt sich in der Projektion auf der Poincare-Kugel als Streuung der Projektionspunkte wieder. Es bilden sich Cluster, deren Zentren dabei im wesentlichen an derselben Stelle bleiben, an der der Projektionspunkt, der an einer glatten Oberfläche reflektierten Welle abgebildet wird, dargestellt ist.Um eine Klassifikation für den Rauhigkeitszustand zu erhalten, wird der aus der Streuung resultierende Depolarisationsgrad der Welle berechnet. Bei zunehmender Eisschichtdicke der rauhen Fahrbahn wandern die Cluster auf Kreisbahnen wie oben beschrieben (Fig.3).
Bei Nässe oder Verschmutzung der Fahrbahn wandern die Projektionspunkte vom Äquator der Poincare-Kugel in Richtung der Projektionspunkte, die den Polarisationenszuständen zugeordnet sind, die orthogonal zu der ausgesendeten Polarisationzuständen sind. Für linkszirkular gesendete Polarisationszustände wandert z.B. der Projektionspunkt in Richtung des Pols der der rechtsdrehenden zirkularen Polarisation zugeordnet ist. Die Klassifikation des Nässe- oder Verschmutzungsgrades erfolgt über die Korrelation mit der vertikalen Komponente der reflektierten Welle. Ist z.B. die einfallende Welle vertikal polarisiert, so wird auf Grund der Lage des Einfallswinkels in der Nähe des Brewsterwinkels für trockene Fahrbahnen, fast kein vertikal polarisierter Anteil der Welle reflektiert. Mit zunehmendem Feuchtigkeitsgrad ändert sich die Dielektrizitätskonstante der Oberfläche dahingehend, daß der vertikale Anteil der reflektierten Welle proportional ansteigt.

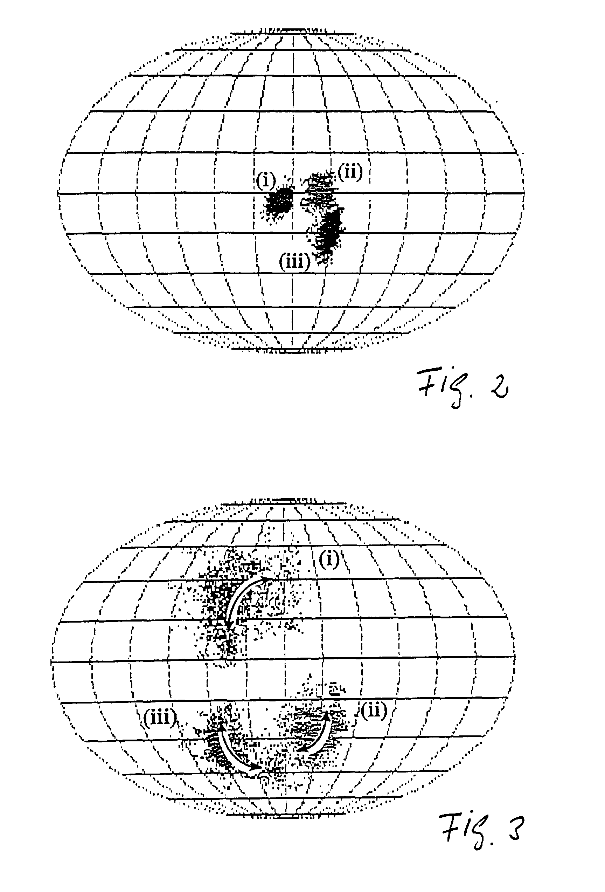

Für die um -45° linear und die rechtszirkular polarisierten einfallenden Wellen sind die Verteilungen und Bewegungen der Projektionspunkte auf der Poincare-Kugel in den Fig. 1, 2 und 3 dargestellt. Eine Klassifikation und Auswertung erfolgt analog den oben beschrieben Beispielen.

Die Erfindung ist nicht auf die mathematische Darstellung mittels der Poincare-Kugel beschränkt, sondern es können andere mathematische Darstellungen z.B. mit kartesischen Koordinaten verwendet werden.

## Patentansprüche

1. Verfahren zur Erkennung des Zustandes einer Fahrbahnoberfläche mit einem Mikrowellen-Sende-Empfangs-System,
bei welchem die Einfallswinkel der vom Mikrowellen-System gesendeten Signale leicht unterhalb des Brewster Winkels für trockene Straße eingestellt werden,
wobei das Mikrowellen-System polarisationsselektiv betrieben wird und die Depolarisationseigenschaften des ausgeleuchteten Fahrbahnbereichs in einer mathematischen Darstellung aufgenommen werden, um daraus den Zustand der Fahrbahnoberfläche zu bestimmen,
**dadurch gekennzeichnet,**
**dass** als mathematische Darstellung die Abbindung der Polarisationszustände der reflektierten Signale als Projektionspunkte auf einer Poincare-Kugel dient, wobei aus der Verteilung und der Bewegung der Projektionspunkte die Rauhigkeit, der Nässe-, Verschmutzungs- und Vereisungsgrad der Fahrbahnoberfläche bestimmt wird.

2. Verfahren nach Anspruch 1, **dadurch gekennzeichnet, daß** die Rauhigkeit der Fahrbahnoberfläche aus einer größeren Streuung der Projektionspunkte um den Projektionspunkt für glatte Fahrbahn bestimmt wird.

3. Verfahren nach Anspruch 2, **dadurch gekennzeichnet, daß** bei Nässe, Vereisung und Verschmutzung der Fahrbahnoberfläche die Projektionspunkte auf der Poincare-Kugel auf links- oder rechtsdrehenden Kreisbahnen bewegt werden und aus der Richtung und Länge der Drehbewegung das die Fahrbahn bedenkende Material und die Schichtdicke des Materials bestimmt wird.

## Claims

1. Method for identification of the state of a roadway surface using a microwave transmitting/receiving system,
in which the incidence angles of the signals which are transmitted from the microwave system are set slightly below the Brewster angle for a dry road, with the microwave system being operated on a polarization-selective basis, and the depolarization characteristics of the illuminated roadway area being recorded in a mathematical representation in order to determine the state of the roadway surface from this,
**characterized**
**in that** the image of the polarization states of the reflected signals as projection points on a Poincaré sphere is used as the mathematical representation, with the roughness, the degree of wetness, the degree of dirt and the degree of icing of the roadway surface being determined from the distribution and the movement of the projection points.

2. Method according to Claim 1, **characterized in that** the roughness of the roadway surface is determined from greater scatter of the projection points around the projection point for a smooth roadway.

3. Method according to Claim 2, **characterized in that**, if the roadway surface is wet, icy and dirty, the projection points on the Poincaré sphere are moved on anticlockwise- or clockwise-rotating circular paths and the material that is contaminating the roadway and the layer thickness of the material are determined from the direction and link of the rotary movement.

## Revendications

1. Procédé de reconnaissance de l'état de la surface d'une voie de circulation comprenant un système émetteur/récepteur à hyperfréquences, avec lequel l'angle d'incidence des signaux émis par le système à hyperfréquences est réglé légèrement au-dessous de l'angle d'incidence brewstérienne pour la route sèche, le système à hyperfréquences étant utilisé avec une polarisation sélective et les propriétés de dépolarisation de la zone éclairée de la voie de circulation étant enregistrées dans un modèle mathématique afin d'en déterminer l'état de la surface de la voie de circulation, **caractérisé en ce que** la représentation des états de polarisation des signaux réfléchis sous la forme de points de projection sur une bille de Poincaré est utilisée comme modèle mathématique, la rugosité, le degré d'humidité, d'encrassement et de givrage de la surface de la voie de circulation étant déterminés à partir de la distribution et du mouvement des points de projection.

2. Procédé selon la revendication 1, **caractérisé en ce que** la rugosité de la surface de la voie de circulation est déterminée à partir d'une dispersion plus grande des points de projection autour du point de projection pour une voie de circulation lisse.

3. Procédé selon la revendication 2, **caractérisé en ce que** dans le cas d'une surface mouillée, gelée et encrassée de la voie de circulation, les points de projection sur la bille de Poincaré sont déplacés sur des orbites circulaires tournant à gauche ou à droite et le matériau qui recouvre la voie de circulation ainsi que l'épaisseur de la couche de matériau sont déterminés à partir de la direction et de la longueur du mouvement rotatif.
